**Europäisches Patentamt**

**European Patent Office**

**Office européen des brevets**

(19)

(11) Veröffentlichungsnummer : **0 365 477 B1**

(12) **EUROPÄISCHE PATENTSCHRIFT**

(45) Veröffentlichungstag der Patentschrift :
05.08.92 Patentblatt 92/32

(51) Int. Cl.⁵ : **F16B 13/06**

(21) Anmeldenummer : **89810768.5**

(22) Anmeldetag : **10.10.89**

(54) **Spreizanker.**

(30) Priorität : **17.10.88 DE 3835300**

(43) Veröffentlichungstag der Anmeldung :
**25.04.90 Patentblatt 90/17**

(45) Bekanntmachung des Hinweises auf die
Patenterteilung :
**05.08.92 Patentblatt 92/32**

(84) Benannte Vertragsstaaten :
**AT BE CH DE ES FR GB IT LI NL**

(56) Entgegenhaltungen :
**GB-A- 2 151 739**

(73) Patentinhaber : **HILTI Aktiengesellschaft
FL-9494 Schaan (LI)**

(72) Erfinder : **Mark, Fritz
Rheinstrasse 27b
A-6841 Mäder (AT)**

(74) Vertreter : **Wildi, Roland
Hilti Aktiengesellschaft Patentabteilung
FL-9494 Schaan (LI)**

EP 0 365 477 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Spreizanker zum Befestigen in Bohrlöchern, mit einer Spreizhülse und einer Ankerstange, wobei die Spreizhülse setzrichtungsseitig von Längsschlitzen begrenzte schalenförmige Spreizsegmente aufweist, die durch Einziehen eines Spreizkegels in die Spreizhülse durch Biegen um eine Biegestelle radial auslenkbar sind.

Aus der DE-A 31 37 226 ist ein Spreizanker bekannt, der in Bohrlöchern mit kegeliger Erweiterung befestigt wird. Der Spreizanker weist eine Spreizhülse mit schalenförmigen Spreizsegmenten und eine Ankerstange mit Spreizkegel auf. Die Spreizsegmente werden durch Einziehen des Spreizkegels zum formschlüssigen Eingriff in die kegelige Erweiterung radial ausgelenkt. Dabei werden die Spreizsegmente um eine diese mit dem angrenzenden Teil der Spreizhülse verbindende Querschnittsschwächung gebogen.

Bei diesem bekannten Spreizanker sind die Innen- und Aussenkontur zylindrisch, also mit gleichbleibendem Krümmungsradius ausgebildet. Der innenseitige Krümmungsradius entspricht dabei dem Krümmungsradius der Hülsenbohrung in dem an die Spreizsegmente anschliessenden Bereich der Spreizhülse, während der aussenseitige Krümmungsradius dem Krümmungsradius der zylindrischen Aussenkontur des besagten Bereiches der Spreizhülse entspricht.

Beim Einziehen des Spreizkegels gelangt dieser mit dem zum freien Ende hin sich vergrössernden Krümmungsradius zentrisch zwischen die Spreizsegmente, wobei sich die Innenkontur der Spreizsegmente aufgrund des gleichbleibenden Krümmungsradius nur mit den umfangsrichtungsseitigen Längskanten am Spreizkegel radial abstützt. Die Spreizsegmente liegen also am Spreizkegel hohl auf. Aussenseitig legen sich die Spreizsegmente an der kegeligen Kontur der Erweiterung ebenso nur unter Linienkontakt an, da die Spreizsegmente aussenseitig einen gleichbleibenden Krümmungsradius aufweisen und der Krümmungsradius der Erweiterung hingegen sich zum Bohrungsgrund hin erweitert. Die Spreizsegmente liegen folgen nur mit dem Rücken an der kegeligen Kontur der Erweiterung auf.

Durch die innen- und aussenseitige Anlage der Spreizsegmente unter Linienkontakt treten bei Belastung des Spreizankers sehr hohe spezifische Druckbelastungen zwischen den Spreizsegmenten und dem Spreizkegel bzw der Wandung der Erweiterung auf. Dies kann insbesondere zu Ueberbeanspruchung der die Spreizsegmente abstützenden Stellen der Erweiterung und dadurch zur Beeinträchtigung der Befestigung führen. Es ist nicht möglich, nach dem Auslenken eine flächenhafte Anlage der Spreizsegmente zu erreichen, da für ein Verformen der biegesteifen Spreizsegmente zwecks Anpassung an die Kegelkonturen von Spreizkegel und Erweiterung zu grosse Kräfte erforderlich wären.

Aus der GB-A-2 151 739 ist ein Spreizanker bekannt, in dessen Spreizschalen ein Spreizkörper einziehbar ist, der eine durch konvexe Bogenflächen gebildete Mantelkontur mit gleichbleibender Krümmung aufweist und wobei die Innenkontur der Spreizschalen entsprechend der Bogenfläche gleichbleibend gekrümmt ist.

Bei diesem bekannten Spreizanker kommt es aufgrund der gleichbleibenden Krümmung von Spreizkörper und Spreizschalen beim Einziehen des Spreizkörpers zu keiner Verformung und somit zu keinem Verklemmen. Somit kann mit diesem Spreizanker zwar eine flächenhafte Anlage der Spreizschalen an den Spreizkörper erreicht werden, nicht aber eine flächenhafte Anlage der Spreizschalen an der kegeligen Erweiterung des Bohrloches.

Der Erfindung liegt die Aufgabe zugrunde, einen Spreizanker zu schaffen, der im gespreizten Zustand eine flächenhafte Anlage der Spreizsegmente einerseits an den Kegelkonturen des Spreizkegels und andererseits an der kegeligen Erweiterung der Bohrlöcher gewährleistet.

Erfindungsgemäss wird die Aufgabe dadurch gelöst, dass die Innen- und Aussenkontur der sich in unausgelenktem Zustand befindlichen, einander seitlich berührenden Spreizsegmente von der Biegestelle zum freien Ende hin einen sich vergrössernden Krümmungsradius aufweisen.

Die Grösse und Zunahme der Krümmungsradien über die Länge der Spreizsegmente entspricht an der Innenkontur der Spreizsegmente den Radien des Spreizkegels, dh die Verlängerung des Krümmungsradius der Innenkontur der Spreizsegmente korrespondiert mit den Krümmungsradien des Spreizkegels derart, dass bei vollständig eingezogenem Spreizkegel sich einander gleiche Krümmungsradien von Spreizsegmenten und Spreizkegel gegenüberliegen. Ebenso korrespondieren die Krümmungsradien der Aussenkontur der Spreizsegmente mit den Krümmungsradien der kegeligen Erweiterung, so dass bei eingezogenem Spreizkegel auch die gleichen Krümmungsradien von Spreizsegmenten und Erweiterung einander gegenüberliegen. Dadurch ist am Ende des Einziehens des Spreizkegels eine flächige Anlage zwischen den Spreizsegmenten und dem Spreizkegel einerseits sowie der kegeligen Erweiterung andererseits erreicht.

Entsprechend der Form eines Kegels mit geradliniger Seitenkontur des Mantels vergrössert sich der Krümmungsradius entlang der in Achsrichtung der Spreizhülse verlaufenden Länge der Spreizsegmente zweckmässig kontinuierlich. Diese Ausbildung zeichnet sich durch einfache Herstellbarkeit aus, wobei dies auch für die Herstellung der dazu passenden Kegelkonturen von Spreizkegel und Erweiterung des Bohrloches zutrifft.

2

Vorzugsweise entspricht der kleinste Krümmungsradius der Spreizsegmente etwa dem Krümmungsradius der Spreizhülse. Der Durchmesser des Fussbereiches des Spreizkegels ist zweckmässig gleich oder geringfügig kleiner als der Durchmesser der Hülsenbohrung in dem an die Biegestelle angrenzenden, den Spreizsegmenten abgewandten Bereich der Spreizhülse. So wird nebst hemmungsfreiem Einlaufen des Spreizkegels in die Spreizhülse erreicht, dass der Spreizkegel, unter Einziehen bis zur Biegestelle, die Spreizsegmente von der Biegestelle weg zu deren freien Ende hin flächig radial abstützt. Es wird also eine grosse Stützlänge gewährleistet.

Mit Vorteil entspricht der grösste Krümmungsradius dem 1,2- bis 1,6-fachen des kleinsten Krümmungsradius. In Verbindung mit dieselbe Veränderung des Krümmungsradius aufweisenden Kegelkonturen von Spreizkegel und Erweiterung wird so eine zuverlässige Abstützung der ausgelenkten Spreizsegmente erreicht. Ebenso ist hierdurch nur ein kurzer Einziehweg der Ankerstange erforderlich.

Die Spreizsegmente weisen zweckmässig entlang der in Achsrichtung der Spreizhülse verlaufenden Länge und entlang der Umfangserstreckung eine gleichbleibende Wandstärke auf. Dadurch wird nebst einfacher Herstellung der Spreizsegmente auch erreicht, dass diese unter gleichem Kegelwinkel an den Kegelkonturen von Spreizkegel und Erweiterung anliegen. Der vom Spreizkegel auf die Spreizsegmente eingeleitete Spreizdruck wird gleichmässig über die Oberfläche der Spreizsegmente verteilt auf die Wandung der Erweiterung übertragen.

Die Erfindung wird nachstehend anhand von Zeichnungen, die ein Ausführungsbeispiel wiedergeben, näher erläutert. Es zeigen:

Fig. 1 einen Spreizanker in Ausgangsstellung, im Längsschnitt;

Fig. 2 einen Schnitt durch den Spreizanker nach Fig. 1, gemäss Schnittverlauf II-II, in vergrösserter Darstellung;

Fig. 3 ein Spreizsegment in vergrösserter perspektivischer Darstellung;

Fig. 4 den Spreizanker nach Fig. 1 im Verwendungseinsatz.

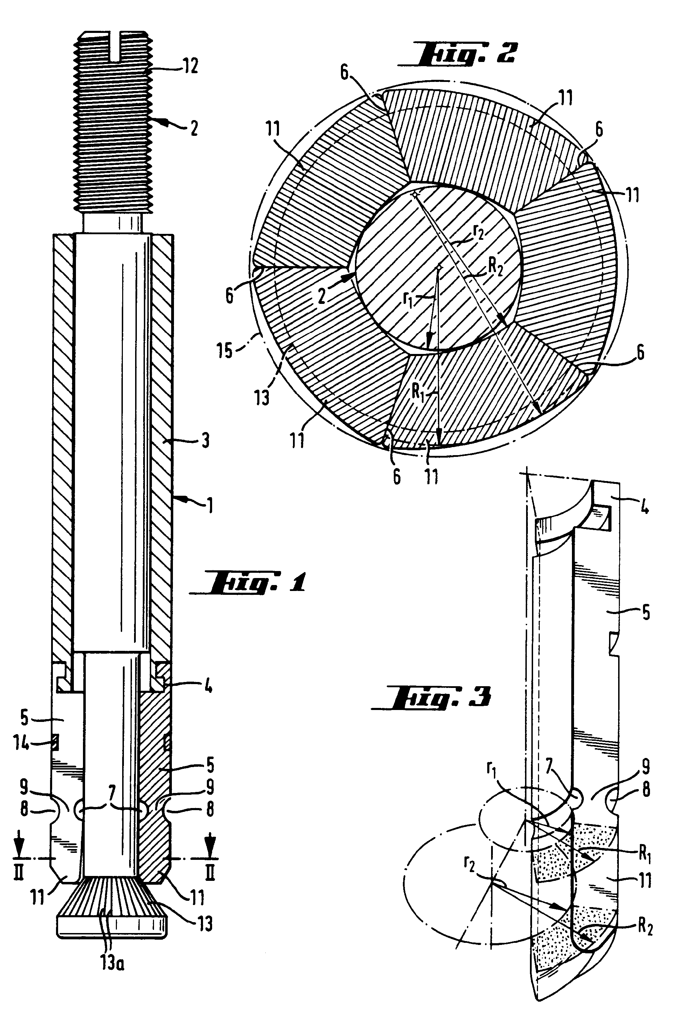

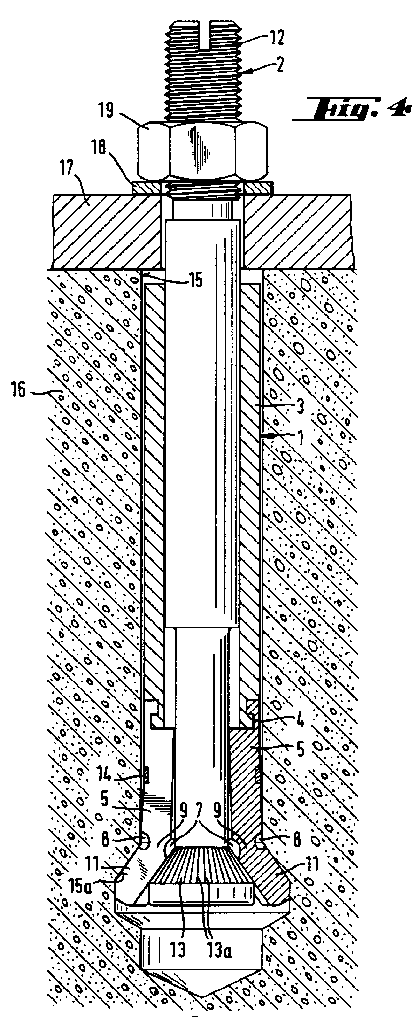

Der in Fig. 1 dargestellte Spreizanker weist eine Spreizhülse 1 und eine Ankerstange 2 auf. Die Spreizhülse 1 besteht aus einem rohrförmigen Halsteil 3, an dem durch eine Klauenverbindung 4 fünf Schalenkörper 5 axial festgelegt sind. Die Schalenkörper 5 sind in Umfangsrichtung durch Längsschlitze 6 voneinander getrennt, wie dies die Fig. 2 verdeutlicht. Im setzrichtungsseitigen Bereich der Schalenkörper 5 weisen diese innenseitig und aussenseitig je eine tangential zur Spreizhülse 1 verlaufende Ausnehmung 7, 8 auf. Die zwischen der innen- und aussenseitigen Ausnehmung 7, 8 jedes Schalenkörpers 5 liegende Querschnittsschwächung dient als Biegestelle 9 für an diese in Setzrichtung anschliessende schalenförmige Spreizsegmente 11. Die Schalenkörper 5 können durch bekannte Mittel, wie beispielsweise Federringe 14 radial auf dem Halsteil 3 zusammengehalten werden.

Die Ankerstange 2 weist in dem der Setzrichtung abgewandten Abschnitt ein Aussengewinde 12 für den Lastangriff auf. Sie durchragt die Spreizhülse 1 und trägt im setzrichtungsseitigen, die Spreizhülse 1 axial überragenden Endbereich einen angeformten Spreizkegel 13. Dieser zwischen die Spreizsegmente 11 einziehbare Spreizkegel 13 ist an der Kegelfläche mit einer Längskerbung 13a versehen.

Die Spreizsegmente 11 weisen in Längs- und Umfangserstreckung gleichbleibende Wandstärke auf. Die konkave Innenkontur der Spreizsegmente 11 weist ebenso wie die konvexe Aussenkontur einen Krümmungsradius auf, der sich von der Biegestelle 9 zum freien Ende hin vergrössert. Wie die Fig. 2 und 3 verdeutlichen, wächst demnach an der Innenkontur der der Biegestelle 9 benachbarte Krümmungsradius $r_1$ zum freien Ende des Spreizsegmentes 11 hin zu einem grösseren Krümmungsradius $r_2$ an. Der kleinste Krümmungsradius $r_1$ entspricht dabei etwa dem Krümmungsradius der Hülsenbohrung und dem Krümmungsradius des Spreizkegels 13 im Fussbereich, während der grösste Krümmungsradius $r_2$ dem Krümmungsradius im erweiterten Endbereich des Spreizkegels 13 entspricht. An der Aussenkontur entspricht der der Biegestelle 9 benachbarte kleinste Krümmungsradius $R_1$ dem äusseren Krümmungsradius des anderen Teiles der Spreizhülse 1, während der dem freien Ende der Spreizsegmente 11 benachbarte äussere Krümmungsradius $R_2$ um die Wandstärke grösser als der grösste Krümmungsradius $r_2$ an der Innenkontur ist. Die Drehpunkte aller Krümmungsradien $r_1$, $r_2$; $R_1$, $R_2$ liegen auf einer unter halbem Kegelwinkel des Spreizkegels 13 zur Hülsenachse geneigten Drehachse. Die Zunahme der inneren bzw äusseren Krümmungsradien $r_1/r_2$, $R_1/R_2$ entspricht dem 1,2- bis 1,6-fachen des jeweils kleineren Krümmungsradius $r_1$, $R_1$.

In Ausgangsstellung des Spreizankers liegen die Spreizsegmente 11 innenseitig an der Ankerstange 2 von der Biegestelle 9 zum freien Ende hin radial nur unter Linienberührung an, da der innere Krümmungsradius $r_1$ der Spreizsegmente 11 gegenüber dem Krümmungsradius der Ankerstange 2 sich bis zum Krümmungsradius $r_2$ hin vergrössert, wie dies die Fig. 2 verdeutlicht.

Bei Verwendung wird der Spreizanker in der Ausgangsstellung gemäss Fig. 1 in ein Bohrloch 15, entsprechend Fig. 4, eingeführt. Das Bohrloch weist nahe dem Bohrungsgrund eine sich zum Bohrungsgrund hin kegelig öffnende Erweiterung 15a auf und ist beispielsweise in ein Bauteil 16 aus Beton eingebracht, an dem ein Anschlussteil 17 befestigt werden soll.

Zum Befestigen des Spreizankers in dem Bohrloch 15 wird die Ankerstange 2 gegenüber der Spreizhülse 1 entgegen der Setzrichtung verschoben. Der Spreizkegel 13 gelangt dadurch zwischen die sich im Bereich der Erweiterung 15a befindlichen Spreizsegmente 11 und lenkt diese radial aus. Die Spreizsegmente 11 legen sich so in die Erweiterung 15a ein. Der eingezogene Spreizkegel 13 verhindert ein Zurückschwenken der Spreizsegmente 11 in die Ausgangsstellung.

In eingezogener Stellung des Spreizkegels 13 liegt der kleine, innere Krümmungsradius $r_1$ an dem den gleichen Krümmungsradius aufweisenden Fussbereich des Kegels 13 und der grössere, innere Krümmungsradius $r_2$ im erweiteren Endbereich des Spreizkegels mit analogem Krümmungsradius auf. Die äusseren Krümmungsradien $R_1$, $R_2$ legen sich an die analoge Krümmungsradien aufweisende kegelige Wandung der Erweiterung 15a ganzflächig an. Zur Erzielung dieser flächenhaften Anlage ist kein über die für das Auslenken der Spreizsegmente 11 erforderlichen Kräfte hinausgehender Kraftaufwand erforderlich.

Beim Befestigen des Anschlussteiles 17 mittels einer Unterlegscheibe 18 und einer Mutter 19 ist ein Mitdrehen der Ankerstange 2 zu unterbinden. Zu diesem Zwecke ist die Längskerbung 13a am Spreizkegel 13 vorgesehen, welche sich drehschlüssig in die Innenkontur der Spreizsegmente 11 eingräbt.

## Patentansprüche

1. Spreizanker zum Befestigen in Bohrlöchern (15), mit einer Spreizhülse (1) und einer Ankerstange (2), wobei die Spreizhülse (1) setzrichtungsseitig von Längsschlitzen (6) begrenzte schalenförmige Spreizsegmente (11) aufweist, die durch Einziehen eines Spreizkegels (13) in die Spreizhülse (1) durch Biegen um eine Biegestelle (9) radial auslenkbar sind, **dadurch gekennzeichnet**, dass die Innen- und Aussenkontur der sich in unausgelenktem Zustand befindlichen, einander seitlich berührenden Spreizsegmente (11) von der Biegestelle (9) zum freien Ende hin einen sich vergrössernden Krümmungsradius ($r_1$, $r_2$ $R_1$, $R_2$) aufweisen.

2. Spreizanker nach Anspruch 1, dadurch gekennzeichnet, dass der Krümmungsradius ($r_1$, $r_2$; $R_1$, $R_2$) sich entlang der in Achsrichtung der Spreizhülse (1) verlaufenden Länge der Spreizsegmente (11) kontinuierlich vergrössert.

3. Spreizanker nach Anspruch 1 oder 2, dadurch gekennzeichnet, dass der kleinste Krümmungsradius ($r_1$, $R_1$) der Spreizsegmente (11) etwa dem Krümmungsradius der Spreizhülse (1) entspricht.

4. Spreizanker nach Anspruch 3, dadurch gekennzeichnet, dass der grösste Krümmungsradius ($r_2$, $R_2$) dem 1,2- bis 1,6-fachen des kleinsten Krümmungsradius ($r_1$, $R_1$) entspricht.

5. Spreizanker nach einem der Ansprüche 1 bis 4, dadurch gekennzeichnet, dass die Spreizsegmente (11) entlang der in Achsrichtung der Spreizhülse (1) verlaufenden Länge und entlang der Umfangserstreckung eine gleichbleibende Wandstärke aufweisen.

## Claims

1. Expansion anchor for fixing in drill holes (15), with an expansion sleeve (1) and an anchor rod (2), in which the expansion sleeve (1) has shell-shaped expansion segments (11) which are bounded at the insertion-direction end by longitudinal slits (6) and which can be deflected radially outwards around a bending point (9) by retracting an expansion cone (13) into the expansion sleeve (1), **characterized in that** the inner and outer contours of the expansion segments (11), when these have not been deflected outwards and are in contact with one another at the sides, have increasing radii of curvature ($r_1$, $r_2$; $R_1$, $R_2$) from the bending points (9) to the free ends.

2. Expansion anchor according to Claim 1, characterized in that the radii of curvature ($r_1$, $r_2$; $R_1$, $R_2$) increase continuously along the lengths of the expansion segments (11) running in the axial direction of the expansion sleeve (1).

3. Expansion anchor according to Claims 1 or 2, characterized in that the smallest radii of curvature ($r_1$, $R_1$) of the expansion segments (11) correspond approximately to the radii of curvature of the expansion sleeve (1).

4. Expansion anchor according to Claim 3, characterized in that the largest radii of curvature ($r_2$, $R_2$) correspond to 1.2 to 1.6 times the smallest radii of curvature ($r_1$, $R_1$).

5. Expansion anchor according to one of Claims 1 to 4, characterized in that the expansion segments (11) have a constant wall thickness along the length running in the axial direction of the expansion sleeve (1) and along the circumferential extent.

## Revendications

1. Cheville à expansion pour la fixation dans des trous de perçage (15), comprenant une douille expansible (1) et une barre d'ancrage (2), la douille expansible (1) comportant, du côté pose, des segments expansibles (11) en forme de coquilles limitées par des fentes longitudinales (6), qui peuvent être déviés radialement, par flexion autour d'un point de pliage (9), par l'insertion d'un cône d'écartement (13) dans la douille expansible (1), **caractérisée en ce** que, à l'état non dévié, les contours intérieur et extérieur des segments expansibles (11) en contact latéral les uns avec les autres, présentent un rayon de courbure ($r_1$, $r_2$; $R_1$, $R_2$) qui augmente à partir du point de pliage (9) en direction de l'extrémité libre.

2. Cheville à expansion selon la revendication 1, caractérisée en ce que le rayon de courbure ($r_1$, $r_2$; $R_1$, $R_2$) augmente continuellement le long de la longueur des segments expansibles (11) qui s'étendent dans la direction axiale de la douille expansible (1).

3. Cheville à expansion selon l'une des revendications 1 ou 2, caractérisée en ce que le rayon de courbure minimum ($r_1$, $R_1$,) des segments expansibles (11) correspond sensiblement au rayon de courbure de la douille expansible (1).

4. Cheville à expansion selon la revendication 3, caractérisée en ce que le rayon de courbure maximum ($r_2$, $R_2$) correspond à 1,2 à 1,6 fois le rayon de courbure minimum ($r_1$, $R_1$).

5. Cheville à expansion selon l'une des revendications 1 à 4, caractérisée en ce que les segments expansibles (11) présentent le long de la longueur s'étendant dans la direction axiale de la douille expansible (1) et le long de l'extension circonférentielle, une épaisseur de paroi constante.

*Fig. 2*

*Fig. 1*

*Fig. 3*

*Fig. 4*